# EUROPEAN PATENT APPLICATION

(11) **EP 1 782 884 A1**
(43) Date of publication of application: **09.05.2007**
(21) Application number: 05110431.3
(22) Date of filing: 07.11.2005
(51) Int. Cl.: B01J 21/10, B01J 21/04, B01J 23/88, B01J 23/888, B01J 37/03, B01J 37/00

(54) **Catalyst based on MgO or alumina nanoporous support and preparation of the same**

(71) Applicant: Research Institute of Petroleum Industry (RIPI), 18799 Tehran (IR)
(72) Inventor: Ali Morad Rashidi, atrophy safari Blv., Teheran (IR); Mohammad Mehdi Akbarnejad, Movahen Dnesh St., Niavaran, Tehran (IR); Abbass Ali Khodadadi, Tehran (IR); Yadollah Mortazavi, Tehran (IR)
(74) Representative: KEIL & SCHAAFHAUSEN Patentanwälte

(57) **Abstract**

The invention relates to a catalyst and the preparation of the same based on a nanoporous support material and a combination of periodic table group VI B and VIII B metals, which catalysts are useful in different chemical processes, in particular for producing carbon nanotubes.

## Description

The invention relates to a catalyst and the preparation of the same based on a nanoporous support material and a combination of periodic table group VI B and VIII B metals, which catalysts are useful in different chemical processes, in particular for producing carbon nanotubes.

The catalysts in accordance with the invention comprise a nanoporous MgO and/or alumina support and an amount of 1-15% by weight of a mixture of two or more of group VI B (Cr, Mo, W) and VIII B (as for example Fe, Co, Ni, Ru, Rh, Pd, etc.
The ratio of said metals is in the range of from 0.5 to 5. Such ratios of the two metals within the catalyst of the invention make the catalyst suited for use during the preparation of carbon nanotubes support material. Advantageously and surprisingly it is possible that selectively desired kinds of nanotubes (such as single, double, and multi-wall carbon nanotubes) with controlled diameters can be produced by making use of the catalysts described according to this invention by respective amendment of the chemical composition or metal ratio of the catalyst and/or adjustment of operational conditions during production of the catalyst according to the invention.

With the catalyst according to this invention one might prepare CNT support materials with better yield and quality. Such CNT material can, for example, be used for the preparation of a FT catalysts.

The invention still further and in particular relates to the preparation of catalysts according to the invention comprising the respective nanoporous support material through either a sol-gel method, optionally comprising an impregnation step.

In the art, three techniques have been reported for synthesis of carbon nanotubes: These techniques include arc discharge, laser ablation of graphite, and catalytic decomposition of hydrocarbons over metal catalysts. The catalytic decomposition method seems to be the most promising method for a large scale production of carbon nanotubes. This method is useful for large-scale production of multi wall carbon nanotubes, as described in US 5,518,584. The method, however, suffers from drawbacks, namely the disadvantage of obtaining bad yields and qualities for the resulting carbon nanotubes.

Dai et al. describes in Chemical. Physics. Lett. 260, 471 (1996) a selective synthesis of single wall carbon nanotubes, (SWCNTs) through decomposition of hydrocarbons over Mo/Al₂O₃, and Peigney (J. Material Research 121,613, (1997)) reports about producing a mixture of SWCNTs and multi wall carbon nanotubes (MWCNTs) through the decomposition of CH₄/H₂ over Fe/Al₂O₃. The application of metal catalysts comprising iron and at least one element chosen from group V B (V, Nb, and Ta) VI B (Cr, Mo, and W), VII B (Mn, Tc and Re) or lanthanide elements on fumed alumina has also been suggested, as described in US 5,707,916.
The application of said catalysts has not, however, resulted in the production of large quantities of carbon nanotubes. Resasco et al. (US 2005/0025696) proposed the production of SWN using metal catalysts, containing at least one element from group VIII B (Co, Ni, Ru, Rh, Pd, Ir and Pt) and at least one element from group VI B (Mo, W and Cr) on a silica support. Said catalyst was produced through the impregnation method.

Quality and yield of carbon nanotubes have shown to be very dependent on the catalyst support, loaded metals and reaction conditions. Among the various supports that have been proposed, MgO possesses the advantage of being easily removable from the product due to the possibility to easily dissolve it in mildly acidic solutions, even at room temperatures (avoiding dangerous treatments, such as using HF or refluxing in the presence of HNO₃).

Although carbon nanotubes can be purified from metals that remain onto the nanotubes as a result of the formation process, a general problem of CVD process is the reduction of carbon nanotubes yield as a function of reaction time. Supports of higher porosity and surface area have been used to overcome this problem. However, introduction of high-porosity supports also leads to reduced sintering of catalyst particles.

Hence, there exists a strong need for a catalyst and a respective process for producing the same which catalyst makes it possible to produce carbon nanotubes (which is an important material for the preparation of, for example, FT catalysts) in high yields, hence overcoming the drawbacks of the art, which catalyst still further can preferably be used to produce carbon nanotubes with desired diameters and still further nanotubes of a desired kind (single, double, multiple wall).

Such an object is solved by the catalyst according to the invention including a process for producing the same and its use for producing CNTs. In accordance with the claims, the present invention provides a highly efficient catalyst based on a nanoporous support material. The catalyst can be produced by either efficient sol-gel methods, one comprising an impregnation step.

As to the sol-gel methods useful for preparing the catalyst according to the invention, two variants are preferred embodiments of the processes claimed according to the invention:

The first method includes mixing of nitrate, acetate, acetylacetonate, tungstate, and chloride salts of both, support and precursor metals, together with different organic additives with in-situ formation of said nanoporous support, and a final calcination.

An alternative second method in accordance with an embodiment of the invention includes a first step of producing said nanoporous supports, using only the before mentioned salts of support materials together with one or a mixture of said organic additives, an afterwards impregnation of said active metals on said nanoporous support, and a final calcination of the resulting catalyst.

In case the nanoporous supports materials are prepared according to the second method, such nanoporous supports materials can be used in a consecutive chemical vapor deposition (CVD) step in which metal precursors, such as for example organo metallic compounds, with carbonyl compounds and metallocenes being preferred, are deposited on the said nanoporous supports.

Using the nanoporous supports produced according to the invention makes it possible to increase the product yield in any process comprising one or more methane combustion step(s) as well as in processes for producing CNTs, which increase of product yield results from making use of said organic additives during preparation of the catalyst according to the invention.

Still further, a catalyst according to the invention, in particular when produced according to a process described in the invention can provide considerable product selectivities when producing carbon nanotubes.

Alternatively, a catalyst according to the invention, in particular when produced according to a process described in the invention can be applied in any process or device according to which a catalytic combustion of methane takes place with the result that the process or device becomes more efficient.

Summing up, the present invention provides a catalyst and alternative processes for the preparation of said catalyst, which catalyst can advantageously can be used in a CNT producing process and leads to a higher selectivity and yield during CNT production. Still further, the catalyst according to the invention is suited for use in any process comprising one or more catalytic methane combustion step(s).

The catalyst is based on a nanoporous MgO and/or Al₂O₃, with a nanoporous MgO support being preferred. In particular, when the advantageous catalyst according to the invention is used during CNT production, considerable product selectivity can be achieved as to the character and nature of the resulting CNTs (SWCNTs, DWCNTs, MWCNTs etc.) as well as with respect to the diameter of the CNTs.

As mentioned before, the present invention provides alternative sol-gel methods for producing the improved advantageous catalyst comprising nanoporous MgO and/or Al₂O₃ support materials with active components comprising one or more of group VI B and VIII B elements.

According to a first embodiment of the process according to the invention, nitrate, chloride, tungstate, acetate and/or, acetylacetonate salts of the metals are used as metal precursors and support materials or a mixture of the support materials, with MgO being a preferred support material, are mixed and a uniform gel is formed. The ingredients are preferably used in such a way that the amount of the precursor metals (metal salts) falls in a range of from 1-15% wt of the total catalyst weight. The ratio of at least two metals but also more than two metals, if more than two are used (M₁/M₂/../Mₙ) is according to preferred embodiments in the range of from 0.5-5.

According to preferred embodiments, the ratio of the metals M₁/M₂/Mₙ/MgO or M₁/M₂/Mₙ/Al₂O₃ (i.e. the ratio of the metals to the support material (with M₁ being a first M₂ being the second and Mₙ being the n^{th} active metal chosen from VI B and VIII B group elements of the periodic table) is in the range of 0.002-0.1.
In order to enhance the in-situ formation of the said catalyst, in particular the in situ formation of the nanoporous support, also with respect to increasing the porosity, (and hence surface area) of said catalysts, one or more organic additive selected from the group consisting or ethylendiamine tetra-acetic acid (EDTA), tartaric acid, poly ethylene glycole, dimethyl formamide, aminodiacetic acid, urea, nitrilotriacetic acid, diglycolic acid, formic acid, oxalic acid and sorbitol are added to the said gel. As to preferred amounts, the ratio of said additives to the sum of the weight of the metal precursors is within the range of from 0.2 to 2 and more preferably in the range of from 0.5 to 0.8.

In a next step, said gel is dried at 100-150°C for 1-3 h, before being calcinated at 500 to 700°C for 1 to 5 hours. The preferred (and optimum) temperature for calcination is in the range of from 500 to 550°C, a suited temperature ramp is increase of 5 to 10°C/min. Alternatively, the gel can also be flash calcinated for 10 to 60 min in a muffle furnace at lower temperatures of from 500 to 700°C. The resulting aerogels are then grounded or milled into a 20-70 µm size powder.

According to a second approach, i.e. an alternative embodiment of a method for producing the catalyst according to the invention, preparation takes place by impregnation of said metal precursors on a beforehand-prepared nanoporous support material or a mixture of the support materials selected from MgO and Al₂O₃, with MgO being preferred. According to this embodiment of the process for producing the catalyst of the invention, precursors are weighed to fulfill the condition to be in a desired range of from 1-15% by weight based on the total weight of the catalyst, and then impregnated on said nanoporous supports. To the precursor salts optionally some water is added, depending on the pore size and porosity of the catalyst support, and an impregnation the catalyst support through a so called incipient impregnation method takes place prior to finally calcinating the catalyst at 500 to 700°C for 1 to 5 hours.

A nanoporous support prepared according to the second embodiment of the invention can alternatively be used in an chemical vapor deposition (CVD) process according to which, after preparing the support through the above mentioned impregnation step, organo metallic compounds, like for example metal carbonyl compound and metalosense, more specifically ferrosene, cobaltosene, wolframosene, nickelosen, cobalt carbonyl and iron carbonyl are precipitated on the support a reactor, at 500-700°C in a way that the amount of the precursors is the desired range of from 1-15% by weight based on the total weight of the catalyst. This method will yield a good distribution of metal particles over the nanoporous catalyst support.

The catalysts according to the invention can be used after an independent reduction step, prior to the final application. Alternatively, the catalysts can be reduced during their final application.

Experimental results making use of the catalysts according to the invention in CNT production show that altering the composition of the catalyst makes it possible to determine the type of the finally produced carbon nanotubes, namely SWCNTs, DWCNTs and MWCNTs.

The selectivity for a desired product is very high (over 92%) and the yield of nanotube growing over the catalysts is about 300% per each gram of the catalyst.
The catalysts according to the invention are alternatively suited for use in any process comprising a catalytic methane combustion step.

The invention is explained in further detail in the following examples, which are not to be understood to limit the scope of the invention in any manner:

### Example 1:

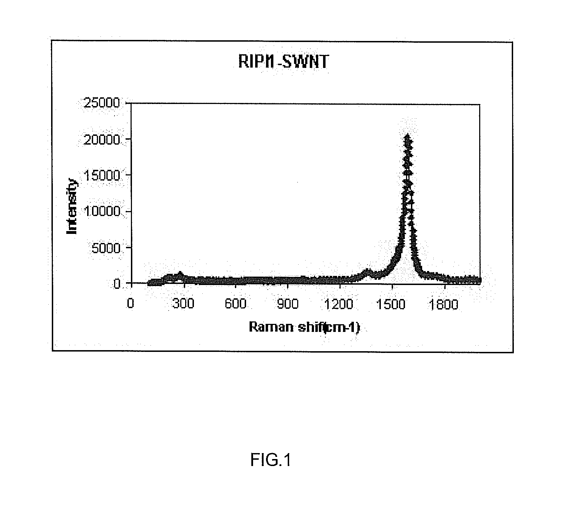

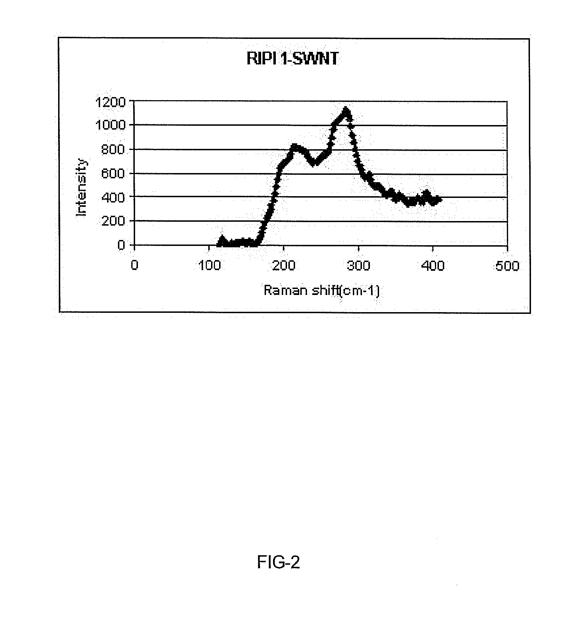

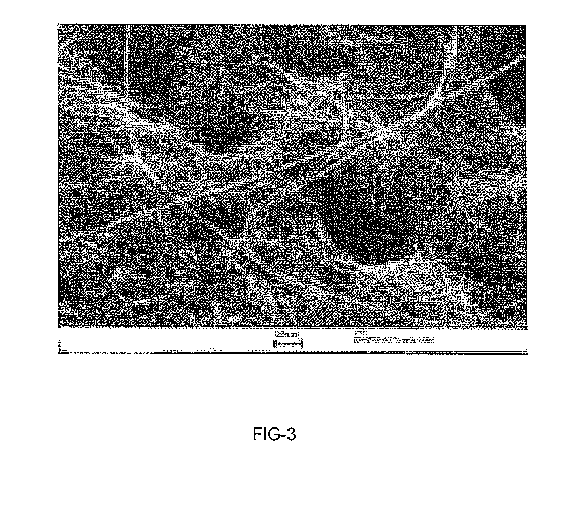

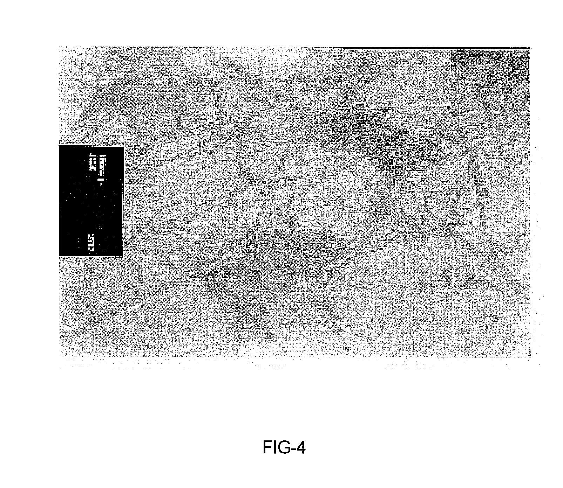

A Fe-W/MgO catalyst was prepared by a sol-gel method, using a solution comprising sorbitol as the organic additive. Fe (NO₃)₂ 9H₂O, Mg (NO₃)₂ 6H₂O, and (NH₄)₆W₇O₂ 4H₂O precursors were mixed with sorbitol (C₉H₁₄O₆) as an organic additive and base to get a uniform gel. Proper amounts of the precursors were used to get a catalyst with molar ratios of 1: 0.25:100 for Fe: W: MgO. The organic additives include sorbitol with a 2:1 weight ratio of the organic additive to total metals (Fe and W) content of the catalyst. The gel was dried at 100°C for 3 h, and then flash calcinated for 30 min, in a muffle furnace already at 550°C. The resulting aerogels were ground into 50 µm size powders with a density of 0.1 to 0.2 g/cm³.
The resulting catalysts were reduced in 200 mL/min pure hydrogen. The temperature during the reduction steps was increased to 850°C with a ramp rate of 5°C/min, kept there for 1 h, and then increased to the reaction temperature of 1000°C. Carbon nanotubes were grown by passing 250 mL/min of a mixture of 20% methane in hydrogen over the catalysts in a quartz horizontal reactor at 1000°C and 1013 hPa (1 atm) pressure. After 40 min growth of carbon nanotubes, the methane was turned off and the reactor was cooled down to room temperature in 200-mL/min flows of nitrogen. The resulting products were analyzed by Raman spectroscopy, SEM and TEM as shown in FIG 1, 2, 3 & 4. A 532 nm diode laser provided excitation.
Raman shifts in the range 100-400 cm⁻¹ is characteristic of the radial breathing mode (RBM) peak of single- wall carbon nanotubes .The diameter of single-wall carbon nanotubes identified by RBM peaks (d (nm)=232/W) in FIG 2 is 0.8 to 1.06 nm. The Raman shift region around 1590 cm⁻¹ in FIG1 is called G bond and is characteristic of the tangential phonon mode of single- wall carbon nanotubes. The Raman shift region around 1300cm⁻¹ is called D bond and associated with disorder, i.e. amorphous carbon. The ratio of G/D represents the purity of the obtained single-wall carbon nanotubes. In this example, as seen in FIG1, the ratio of G/D is 12.4, which suggests that the sample is a high quality single- wall carbon nanotubes.

### Example 2:

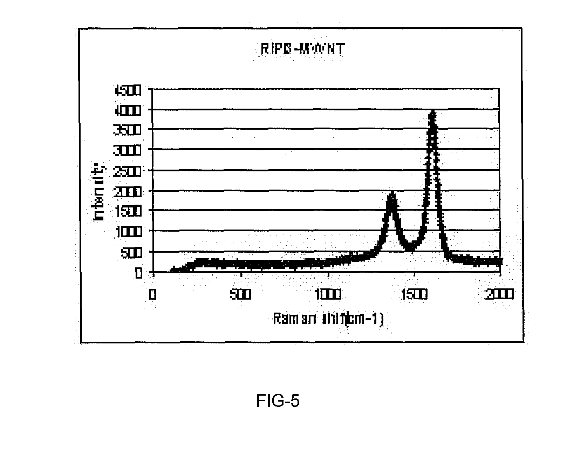

Preparation of multi wall- carbon nanotubes using the preparation procedure of example 1 with a different catalyst composition (8:8:100 Fe: W: MgO) and reaction temperature (1000°C) and 25 minute growth time. The resulting products were analysis by Raman spectroscopy as shown in FIG5. The obtained products are high quality multi-wall carbon nanotubes.

### Example 3:

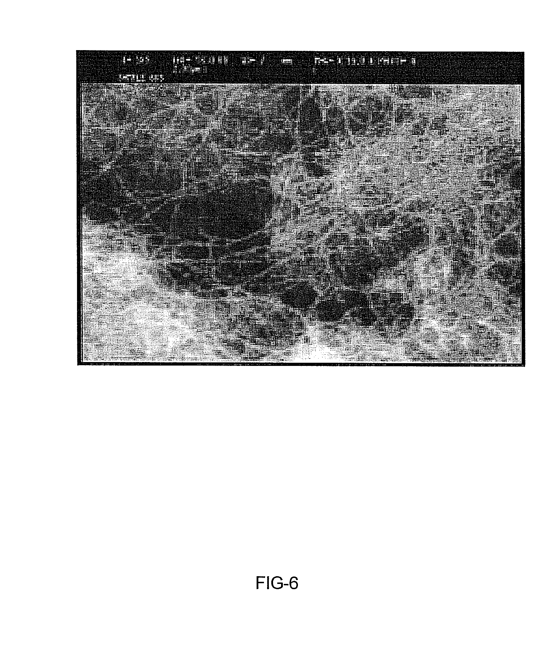

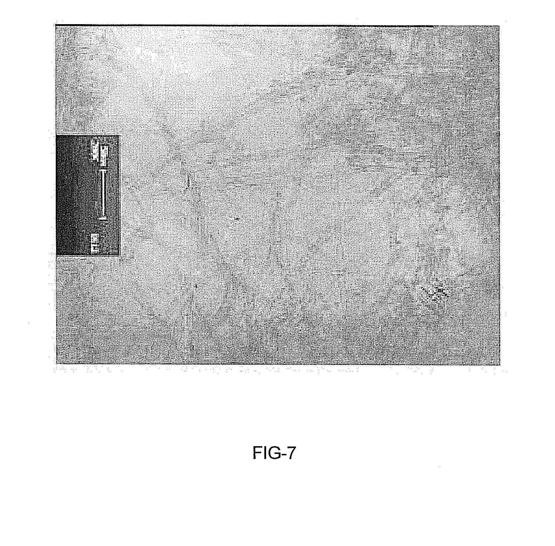

Preparation of double wall carbon nanotubes using the preparation procedure described in example 1 above, however, making use of a different catalyst (Co: Mo/MgO) and composition (1: 0.25:100 Co: Mo: MgO). The starting materials for preparation of catalyst were
Co (NO₃)₂ 9H₂O, Mg (NO₃)₂ 6H₂O, (NH₄)₆Mo₇O₂ 4H₂O and sorbitol (C₉H₁₄O₆). The resulting products were analysis by SEM and TEM as shown in FIG 6 and 7. The products were double wall carbon nanotubes with high purity.

### Example 4:

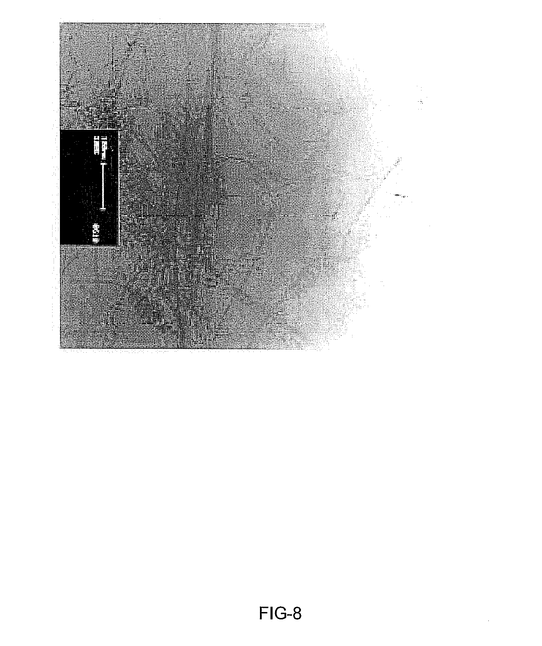

Preparation of single wall carbon nanotubes using the preparation procedure described in example 1 above, however, making use of a different catalyst. The chemical composition of the catalyst was
5: 2.5:100 Co: Mo: MgO on molar ratio basis.
The resulting products were analysis by TEM as shown in FIG 8. The products were high quality single- wall carbon nanotubes with 1nm inner diameter.
The figures 1 to 8 are briefly described:
**FIG.1** shows Raman shifts in the tangential G and D band regions for grown single-wall carbon nanotubes at 1000°C making use of a Fe: W: MgO catalyst according to example 1. A 532 nm diode laser provided excitation.
**FIG.2** Shows redial breathing mode (RBM) Raman shift for grown single-wall carbon nanotubes at 1000°C making use of a Fe: W: MgO catalyst according to example 1. A 532 nm diode laser provided excitation.
**FIG.3** shows a SEM image of purified single-wall carbon nanotubes grown on the Fe: W: MgO catalyst according to example 1.
**FIG.4** TEM pictures of single-wall carbon nanotubes grown on the Fe: W: MgO catalyst according to example 1.
**FIG.5** shows Raman shifts in the tangential G and D band regions for grown multi-wall carbon nanotubes prepared with making use of the Fe: W: MgO catalyst at 1000°C according to example 2. A 532 nm diode lasers provided excitation.
**FIG.6** shows a scanning electron microscopy (SEM) image of purified double wall carbon nanotubes (DWNTs) grown on the Co: Mo: MgO Catalyst according to example 3.
**FIG.7** shows a TEM pictures of double wall carbon nanotubes grown on the Co: Mo: MgO catalyst according to example 3.
**FIG.8** shows a TEM pictures of single-wall carbon nanotubes grown on the Co: Mo: MgO catalyst according to example 4.

## Claims

1. A catalyst comprising a nanoporous MgO and/or Al₂O₃ support and one or more element selected from the group VI B and VIII B of the periodic table produced by a sol-gel method, optionally comprising an impregnation step, for use in any process producing carbon nanotubes or alternatively for use in any process comprising one or more catalytic methane combustion step(s).

2. The catalyst according to claim 1, wherein one or more of elements of the groups VI B and VIII B are selected from the group consisting of Fe, W, Ni, Mo and Co.

3. The catalyst according to claim 1 and/or 2, wherein one or more of elements of the groups VI B and VIII B are present in 1 to 15% wt based on the total weight of the catalyst.

4. The catalyst according to one or more of the preceding claims, wherein the ratio of M₁/M₂ /../Mn (M₁ being a first M₂ being the second and Mₙ being the n^{th} active metal) is in the range of from 0.5 to 5.

5. The catalyst according to one or more of the preceding claims, wherein the nanoporous support comprises MgO.

6. A process for producing a catalyst as described within one or more of the preceding claims by a sol-gel method, with gel formation and calcination.

7. The process according to claim 6, wherein the gel formation step for producing catalyst including the nanoporous support is carried out by mixing aqueous solutions of one or more selected from acetate, nitrate, tungstate chloride and/or acetylacetonate salt of any suited metal selected from elements of the groups VI B and VIII B of the periodic table and a suited salt of the support material selected from Al₂O₃ and MgO with one or more organic additive.

8. The process according to claim 6 and/or 7, wherein the organic additive is selected from one ore more of ethylenediamine tetra acetic acid (EDTA), tartaric acid, poly ethylene glycole, dimethyl formamide, aminodiacetic acid, urea, nitrilotriacetic acid, diglycolic acid, formic acid, oxalic acid, DMF, PEG amino acetic acid, tartaric acid and/or nitrilo triacetic acid.

9. The process according to claim 6, wherein suited salts of the support materials are mixed with any organic additive as defined in claim 8 and one or more active metal is impregnated onto the nanoporous support prior to calcination.

10. The process according to one or more of the preceding claims 6 to 9, wherein as organic additive sorbitol is used.
